(19) Europäisches Patentamt
European Patent Office
Office européen des brevets

(11) **EP 3 460 462 A1**

(12) **EUROPEAN PATENT APPLICATION**

(43) Date of publication:
**27.03.2019 Bulletin 2019/13**

(51) Int Cl.:
***G01N 27/407*** (2006.01)

(21) Application number: **17382636.3**

(22) Date of filing: **25.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Francisco Albero S.A.U.**
**08908 L'Hospitalet de Llobregat (ES)**

(72) Inventors:
• **GARCÍA VAN EST, Koen**
**08908 L Hospitalet - Barcelona (ES)**

• **VICIENT AGUILERA, Ferran**
**08908 L Hospitalet - Barcelona (ES)**
• **BAILO BOBI, Eduard**
**08908 L Hospitalet - Barcelona (ES)**
• **RAMOS PÉREZ, Francisco Manuel**
**08908 L Hospitalet - Barcelona (ES)**

(74) Representative: **Balder IP Law, S.L.**
**Paseo de la Castellana 93**
**5ª planta**
**28046 Madrid (ES)**

(54) **EXHAUST GAS SENSOR**

(57) An electrochemical exhaust gas sensor for determining an oxygen concentration in an exhaust flow of an internal combustion engine is provided. The electrochemical exhaust gas sensor comprises a protective cover comprising a first end attached to a part of a housing exposed to an exhaust side, and a second end aimed to output one or more lead wires exposed to a reference side, an oxygen sensor at least partly enclosed within the protective cover and connected to the one or more lead wires, the oxygen sensor comprising a measuring electrode exposed to the exhaust side and a reference electrode exposed to a volume that is isolated from the exhaust side, at least one grommet for sealing the second end of the protective cover, and one or more through-channels provided in said grommet for receiving the lead wires, characterised in that the at least one grommet consists of a porous material that allows air diffusing from the reference side to the interior of the oxygen sensor and then reaching the reference electrode. A method for producing an electrochemical exhaust gas sensor is also provided.

FIG. 5

## Description

## TECHNICAL FIELD

The present disclosure relates to an electrochemical exhaust gas sensor for determining an oxygen concentration in an exhaust flow of an internal combustion engine, and to a method for producing an electrochemical exhaust gas sensor.

## BACKGROUND

Oxygen concentration sensors have been conventionally installed in exhaust pipes being a part of the exhaust system of an automobile engine to control an air/fuel ratio of the automobile engine, as well as to diagnose the proper functioning of the catalyser, whose function is to reduce gas emissions.

Oxygen concentration sensors, also known as lambda probes, may be classified according to their output signal. Thus, lambda probes may comprise switch (or voltammetric) electrochemical sensors, and linear (or amperometric) electrochemical sensors.

Oxygen concentration sensors have at least two catalytic noble metal electrodes, the outer electrode being exposed to the exhaust fumes that outcome from the exhaust pipe, and the inner electrode being exposed to the ambient air (atmosphere) as a reference air. An ionic conductor, usually YSZ (Yttrium Stabilized Zirconia), is located between both electrodes.

If $P_{O,o}$ and $P_{O,i}$ are the partial pressures of oxygen in the gases in contact with the outer and the inner electrodes, respectively, the sensor generates an open circuit voltage given by the Nernst equation:

$$V_{OC} = RT/4F \ 1n(P^*_{O,i}/P^*_{O,o})$$

where R, T, and F are respectively the ideal gas constant, the absolute temperature, and the Faraday constant.

This lambda probe generally includes a sensor element inserted into a sealing ceramic pack located into a hexagonal member, a protective cover disposed at an end portion of the hexagonal member, a lead wire inserted into the protective cover, and an elastic insulating member disposed inside of the protective cover and also having a number of lead wires axial through-channels for receiving the lead wire(s). Conventionally, the lead wire(s) inserted into the lead wire(s) axial through-channel(s) is sealed and fixed into lead wire(s) axial through-channel(s) by sealing it to the protective cover in the radial direction.

As a matter of fact, over time the fixing position of the oxygen concentration sensor has been varied depending on the engineering system. For instance, it has been frequently installed at the downstream side of the exhaust pipe. In this case, the oxygen concentration sensor may be splashed with water thrown out by a tire or the like during the driving of a vehicle or it may be doused in puddles. If water enters the inside of the oxygen concentration sensor due to dousing or splashing of water, it will cause disorders and malfunctions such as deterioration of an output of the oxygen concentration sensor and cracks of the ceramic sensor element itself.

Sensor elements of the so called air reference oxygen sensors have a reference gas channel, which is connected on the one hand with a reference electrode and on the other hand with the internal volume of the sensor assembly. This internal volume of the sensor assembly needs to be waterproof, and at the same time it needs to guarantee an oxygen supply via the reference gas channel to reach up to the reference electrode.

In recent years, there has been an increase in the number of oxygen concentration sensors including a built-in heater and taking out a grounding lead, as well as planar oxygen concentration sensors having a two-cell type sensing element including many lead wires. Since a large number of the lead wires are disposed inside the protective cover in these oxygen concentration sensors, a larger quantity of lead wire axial through-channels have to be disposed in the grommet.

It is well known the use of elastic grommets for that purpose. In such oxygen sensors, when a lead wire is inserted into an elastic grommet and the protective cover is caulked to seal and fix the lead wire on the elastic grommet, compression stress imposed on such grommet by caulking the protective cover is concentrated differently on thin and thick portions of the grommet, namely, such compression stress distribution may not be even over the grommet portions, and thus deformations around the lead wires may occur. Accordingly, the oxygen sensor may present an insufficient sealing performance on the contact surface between the lead wires and the axial through-channels. If that is the case, when the oxygen sensor is splashed with water, the water may easily go into the interior of the oxygen sensor through the mentioned channels.

This may be the case of oxygen sensors employed for controlling an air/fuel ratio in an engine, since they are partly located within the exhaust pipe, as it has been mentioned above.

Moreover, when such an elastic grommet is exposed to high temperatures, such as those of exhaust gases passing through the exhaust pipe, a large amount of compression stress is imposed on it due to physical restrictions on the expansion forces. Therefore, the grommet may at least partly be severely deformed and lose its elasticity, thus wearing out, so that portions in such a state can no longer seal between the lead wire channels and the lead wires. This fact increases the risk of water or humidity reaching the reference electrode.

Although sensors known as HEGO sensors (Heated Exhaust Gas Oxygen Sensor) have been used successfully for years, several problems have occasionally arisen. One of these problems is the loss of the reference air as a result of rich exhaust gas leaking into the reference air compartment through the exhaust gas seal. Two of the main causes responsible for this loss of reference air are the replacement of the metal seal with an electrically insulating ceramic seal which cannot be entirely impervious to gaseous species, and, as mentioned above, the need to make the sensor waterproof, which severely limits the amount of air that can enter the air compartment from the ambient atmosphere. As a result, the oxygen concentration in the reference compartment can be temporarily depleted when the exhaust gas leak becomes sufficiently high because the catalytic inner electrode equilibrates the combustible species leaking from the exhaust side with the oxygen of the reference compartment. Under these conditions, for rich air-to-fuel mixtures, $P_{O,i}$ and $P_{O,o}$ are both very small and of the same order of magnitude. Consequently, the sensor's $V_{oc}$ (open circuit voltage) has a small value. For lean air-to-fuel mixtures, $P_{O,i}$ is many orders of magnitude smaller than $P_{O,o}$ and the $V_{oc}$ has a large negative value. This negative shift of the sensor $V_{oc}$ vs air-to-fuel ratio is called Characteristic Shift Down (CSD).

It is known the use of a semi-permeable membrane on the oxygen sensor connector or on the grommet, or to run the cable insulation of semipermeable material in order to avoid water or humidity from reaching the reference electrode. In this way, no water penetrates to the reference electrode, while at the same time the supply of oxygen is ensured. However, the low mechanical and temperature resistance of such a membrane may lead to a mere reduction in the CSD effect and be a low durability solution.

DE10043089 discloses a diffusion barrier that has greater permeability or diffusion rate for oxygen molecules than for hydrocarbons. It is integrated with or connected to the reference gas channel and comprises a porous filling. Alternatively or in addition, oxidation of such a component at the reference electrode is at least partially prevented. The diffusion barrier is spaced by the reference gas channel from the reference electrode and/or is located in a cold part.

A problem of this solution may be that the CSD behaviour is only reduced or delayed, and thus its benefits do not last in the long term. Moreover, being the diffusion barrier located in the cold part of the sensor, oxidation of HC components may present a low efficiency, since oxidation takes place only over certain temperatures, and thus not be very effective.

US5900129 (A) discloses an oxygen concentration sensor having excellent sealing performance between a lead wire and a lead wire insertion hole that includes a sensor element disposed insertedly into a housing and an elastic insulating member disposed inside protective covers and having a lead wire insertion hole for inserting the lead wires. The lead wire insertion hole in the elastic insulating member has a rib protruding in the radial direction. The elastic insulating member is caulked and fixed by the protective covers.

However, such solution presents several problems. On the one hand, the interface between the elastic insulating member and the water repellent filter is affected by the temperature increase, so that its water tightness is decreased. It has been even experimentally observed that at higher temperatures, the elastic member is partly expelled by the elastic member, since both materials do repel each other. Thus, the water tightness performance is reduced and the durability of the probe is compromised.

On the other hand, it may perform an insufficient flow rate of air through the pores of the water repellent filter. This may especially occur at higher exhaust fumes temperatures (namely between 550ºC and 800ºC, depending on the position of the probe with respect to the exhaust pipe). This is due to the temperature increase of the sealing pack of the lambda probe - said sealing pack is in contact with a metallic hexagonal member which is in contact with the exhaust fumes -. The sealing pack suffers a leakage increase at high temperatures, thus leaking fumes inside of the probe. In this case, a higher flow rate of reference air is needed as to compensate the oxygen decrease in the inner volume of the probe. If such flow rate is insufficient, at a certain point the CSD effect will take place.

In this way, it would be desirable to provide a more reliable, simple and cost effective suppression of an unwanted CSD effect at the reference electrode, thereby increasing the measurement accuracy, durability and reliability of the oxygen sensor. Furthermore, the design of the oxygen sensor may be maintained reasonably unvaried with respect to a conventional solution, whereas its high performance is maintained at temperatures above those that limit conventional solutions.

## DESCRIPTION OF THE INVENTION

In a first aspect, an electrochemical exhaust gas sensor for determining an oxygen concentration in an exhaust flow of an internal combustion engine is provided. The electrochemical exhaust gas sensor comprises a protective cover comprising a first end attached to a part of a housing exposed to an exhaust side, and a second end aimed to output one or more lead wires exposed to a reference side, an oxygen sensor at least partly enclosed within the protective cover and connected to the one or more lead wires, the oxygen sensor comprising a measuring electrode exposed to the exhaust side and a reference electrode exposed to a volume that is isolated from the exhaust side, at least one grommet for sealing the second end of the protective cover, and one or more through-channels provided in said grommet for receiving the lead wires, characterised in that the at least one grommet consists of a porous material that allows air diffusing from the reference side to the interior of the oxygen sensor and then reaching the reference electrode.

Such porous material presents hydrophobic properties so that the grommet is waterproof, accomplishing its sensor element protective function. As mentioned above, water getting in contact with the sensor element would break it in the short term. At the same time, reference air may enter the reference channel through the grommet pores, so that the reference air (atmosphere air) to exhaust air leakage ratio may be high enough as to guarantee a positive open circuit voltage. This advantageously may allow eliminating CSD behaviour in the oxygen sensor, even at temperatures as high as 800ºC.

Furthermore, the substitution of a conventional silicone grommet or the like by the porous grommet disclosed in the invention is an economic solution as compared to added elements of more complex geometries. Other elements of the oxygen sensor need not to be changed, so that the production process is not significantly altered and added costs lie to a minimum.

In some examples, the disclosure provides an exhaust gas sensor that further comprises a ceramic grommet being disposed axially between the at least one grommet and a contact clamp. In these examples, the possibility to execute part of the grommet length in a ceramic material, allows for a cost reduction of the oxygen sensor assembly, contributing to the present disclosure being a cost-effective solution.

In a second aspect, the invention provides a method for producing an electrochemical exhaust gas sensor for determining an oxygen concentration in an exhaust flow of an internal combustion engine. The method comprises the steps of providing at least one grommet, wherein the at least one grommet consists of a waterproof porous material, and wherein the at least one grommet has one or more axial through-channels, providing a protective cover, positioning the at least one grommet in the interior of the protective cover so that said grommet is disposed axially between a reference atmosphere and a contact clamp to form a reference side assembly, and pressing the reference side assembly made up of the porous grommet and the protective cover to form a structure which is at least indirectly materially bonded.

In some examples, pressing on the protective cover and the porous grommet may be provided by a crimping machine.

Additional objects, advantages and features of embodiments of the invention will become apparent to those skilled in the art upon examination of the description, or may be learned by practice of the invention.

**BRIEF DESCRIPTION OF THE DRAWINGS**

Non-limiting examples of the present disclosure will be described in the following, with reference to the appended drawings, in which:

Figure 1 illustrates a perspective view of an example of an exhaust gas sensor;

Figures 2A, 2B, 3A and 3B illustrate cross and longitudinal sections of a porous grommet;

Figures 3C and 3D illustrate a cross and a longitudinal section of a porous grommet and of four wires which are inserted in four axial through-channels, respectively;

Figures 4A and 4B illustrate a cross and a longitudinal section of a ceramic grommet, respectively;

Figures 5, 6A, 6B and 6C illustrate perspective views of further examples of an exhaust gas sensor comprising a porous grommet;

Figures 7A and 7B illustrate perspective views of a further example of an exhaust gas sensor comprising a porous grommet and a ceramic grommet, and

Figures 8A, 8B and 8C illustrate perspective views of a further example of a sensor element comprising a reference electrode and a measuring electrode.

Figure 9 illustrates a table of Reference air flow through a porous grommet as a function of external Pressure.

Figure 10 illustrates Reference air flow through a porous grommet and exhaust fumes leakage in a standard sensor group as an air flow versus hexagonal member temperature chart.

**DESCRIPTION OF A WAY OF CARRYING OUT THE INVENTION**

In the present document, the electrochemical exhaust gas sensor end portion which is installed inside of the exhaust pipe of a combustion engine vehicle is referred to as the measuring side, and the opposite end portion which is installed outside of the exhaust pipe - and thus inside of a reference atmosphere - is referred to as the reference side.

In a HEGO sensor (Heated Exhaust Gas Oxygen Sensor), the internal volume of the sensor assembly needs to be waterproof. To this end, an elastic grommet through which lead wires are disposed may prevent humidity to reach the sensor element. However, exhaust gas leaking into the air reference compartment through such exhaust gas seal may lead to an undesired CSD effect. In order to suppress an unwanted CSD effect, a porous grommet is disclosed which allows a sufficiently high flow rate of atmosphere air to enter a reference side of the probe, and therefore to reach a reference channel. Thus, sufficient oxygen may reach the reference electrode as to guarantee a proper functioning of the oxygen sensor.

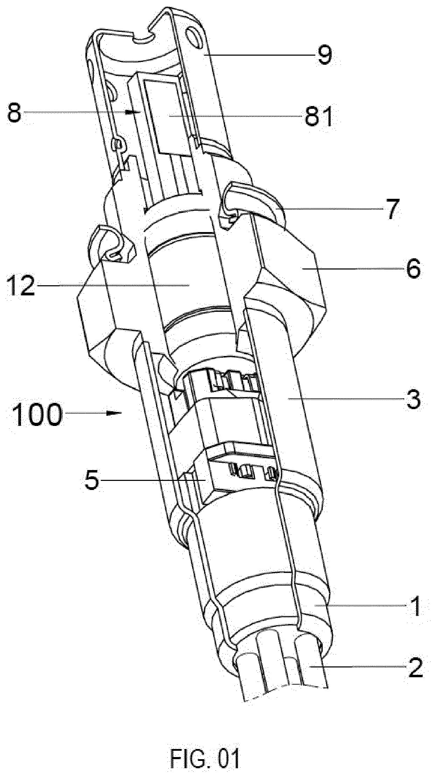

Figure 1 is a schematic drawing showing a gas sensor according to an example of the invention. The gas sensor comprises a sensor element 8 that detects the concentration of a particular gas (namely oxygen in this particular case) included in the measurement gas, a hexagonal member 6 that receives the sensor element 8, a protective cover 3 that is fitted on the base portion of the hexagonal member 6, connection pins (not represented) that crimp lead wires 2 and make an electric contact with the sensor element 8 and are connected to a contact clamp 5, and a porous grommet 1 that receives lead wires 2 and that seals a base portion of the protective cover 3. The hexagonal member 6 is connected to an external cap 9, which is exposed to the engine exhaust fumes. A housing 100 comprises the external cap 9, the hexagonal member 6 and the protective cover 3 and substantially encloses the lambda probe. The external cap is thus located on the measuring side of the probe, and the protective cover is located on the reference side.

Grommets in oxygen sensors are usually made of a silicone material, they are crimped within the housing and their shape adapts to the shape of the protective cover, so that a proper and waterproof sealing of the sensor element is achieved.

However, silicones may easily wear off due to high temperatures and mechanical stress, so that its endurance may be a problem in oxygen sensor applications. Such sensors are usually located close to the exhaust fumes of combustion engines and, consequently, durability is a critical aspect of such components. Depending on the exact position of the lambda probe with respect to the exhaust fumes, said lambda probe may reach temperatures as high as 800ºC. The fact is that, as a general rule, the closest to the engine block the probe is located, the fastest the response of the sensor will be. Therefore, it is desirable to obtain a lambda probe that can withstand temperatures in the exhaust pipe as close to the engine as possible.

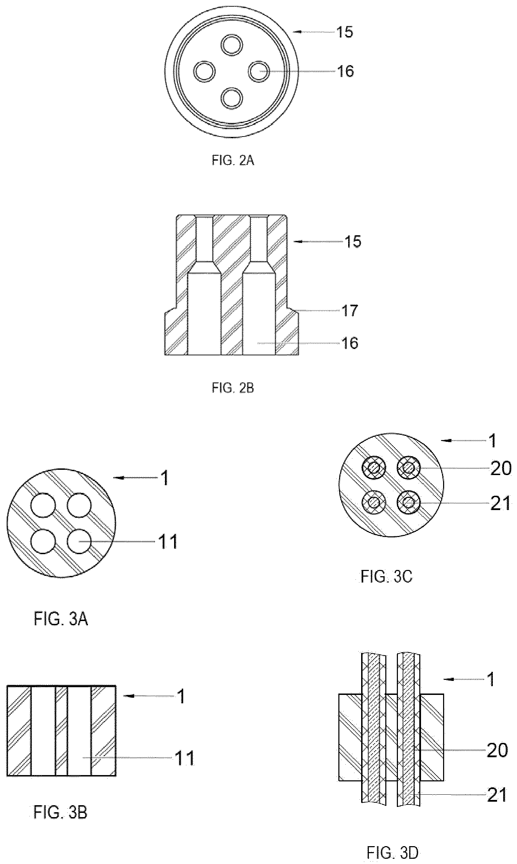

Figures 2A and 2B illustrate a cross and a longitudinal section of a porous grommet 1 according to an example of the invention, respectively. The geometry consists of a double diameter cylinder 15 comprising a number of axial through-channels 16.

This geometry corresponds to that of a standard silicone grommet, wherein the double diameter facilitates the inlet of the lead wires 2 and fits the geometry of the protecting cover 3 so that the grommet may achieve a fixed position. Otherwise, grommets may suffer displacements due to mechanical and temperature stress, notably reducing their tightness function.

Figures 3A and 3B illustrate cross and longitudinal sections of a porous grommet 1. The geometry consists of a cylinder comprising four axial through-channels 11 which receive the lead wires 2.

This part will be working under compression due to crimping forces applied on the protective cover 3, which may be for example a stainless steel tube or housing which covers the grommet.

An example of a grommet suitable to be employed may be a porous grommet made of a Polytetrafluoroethylene material (PTFE). In this particular example, its diameter may range from 7.2 mm to 9.3 mm. The grommet diameter may suffer a reduction of 1mm after the crimping process has taken place.

In general, the porous grommet dimensions may vary according to the particular geometry of the lambda probe design.

PTFE is a fluorocarbon polymer, as it is a compound consisting wholly of carbon and fluorine. PTFE is hydrophobic, thus neither water nor water-containing substances can wet PTFE. PTFE is a thermoplastic polymer, which is a white solid at room temperature.

The PTFE material is advantageous due to its mechanical and chemical properties. On the one hand, a water tightness of IP X6 (IEC 60529) avoids water or humidity entering on the reference side of the lambda probe, thus avoiding damage to the oxygen sensor element 8. Working temperatures may range from -40ºC to +280ºC. It maintains high strength, toughness, self-lubrication and good flexibility, which all proof an advantage in oxygen sensors applications where combustion fumes can achieve high temperatures.

As for the chemical properties, the PTFE material is chemically inert to water, diesel, gasoline, battery acids, refrigerant, engine oils and transmission oils.

Moreover, the porosity of the porous PTFE was purposely designed as to optimally allow a certain reference air volume flow from the reference side through the grommet pores and into the reference volume.

All porous PTFE grommets were made from one semi-finished product. From this, test samples (with a diameter dimension of a 16x3 mm) were taken and both the WIP (water immersion pressure) and air permeability were tested. On the basis of the measured values, the specification of the grommet was determined as that of a 180 mbar WIP and a 50 ml/(s·cm$^2$·bar) air permeability.

More particularly, figures 3C and 3D show schematically four axial through-channels 11, which may receive four lead wires from a connector located on a reference side (not represented) of the exhaust gas sensor protective cover 3. The illustration shows a wire's outer part 20 and inner part 21. Said four wires may be enveloped by a sleeve (not represented) and fixed by a clamp 5 besides the outlet area of said gas sensor reference side. The sleeve may be made of silicon material, fibre glass and silicon composites, or aluminium in particular cases.

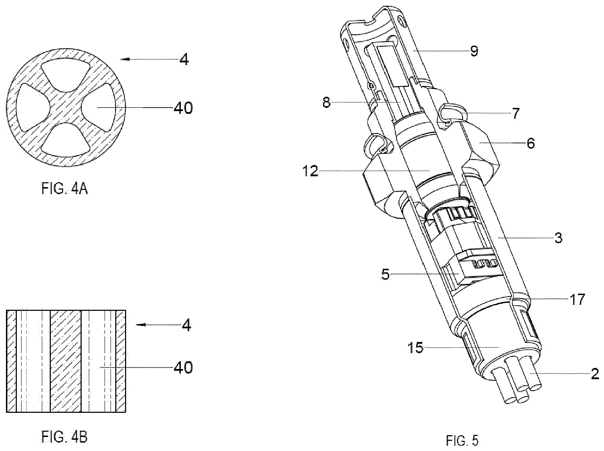

Figures 4A and 4B illustrate a cross and a longitudinal section of a further grommet, respectively, which has four axial through-channels 40. Said grommet may be located axially between the porous grommet 1, 15 and a contact clamp 5. Therefore, axial through-channels 40 may receive the lead wires 2 and lead them to the reference side where they are fixed by the contact clamp 5. The contact clamp also fixes the sensor element 8.

In this case, the grommet may be made of a ceramic material, for example silicate ceramics such as cordierite and steatite ceramics. Such material is commonly used due to its high-temperature resistance, low thermal expansion coefficient (TEC), high electrical and thermal insulating properties, and high chemical resistance. Moreover, it is a cost-effective material as compared to e.g. PTFE materials.

Advantageously, an improved cost/effective design of the oxygen sensor may thus be achieved by combining PTFE and ceramic grommets in a proper manner.

Figure 5 illustrates a perspective view of an example of an exhaust gas sensor comprising a PTFE grommet according to figures 2A and 2B. The grommet may receive lead wires 2 which are led through axial through-channels 16 and, once at the outlet of the grommet, may be clamped by contact clamp 5. Contact clamp 5 may be in contact with a hexagonal member 6, wherein the reference side of the planar oxygen sensor element 8 may be inserted.

The double diameter geometry of the grommet may allow it to be retained at its place. After being crimped, it cannot slip out from the protective cover 3 due to a protrusion 17.

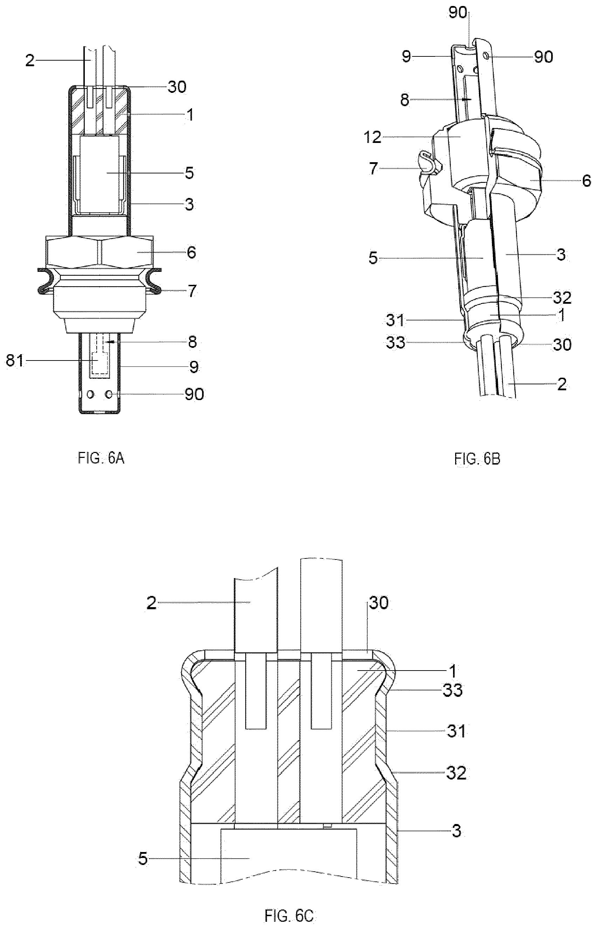

Figures 6A and 6B illustrate perspective views of further examples of an exhaust gas sensor comprising a PTFE grommet according to figures 3A and 3B. In this example, the simple geometry of the grommet (it is a plain cylinder) provides for an improved cost-effective design. As to keep the grommet fixed in place, and thanks to the elastic properties of PTFE, a pressing process may be provided, for example by means of a crimping machine which crimps the protective cover 3 and the grommet 1 contained in it, thus keeping the grommet at a fixed position despite of any mechanical stresses that the sensor might be subject to. In particular, figure 6A illustrates the oxygen sensor previously to the crimping process, and figure 6B illustrates the oxygen sensor after the crimping process.

Figure 6C illustrates a perspective detail view of a reference side assembly according to this example of an exhaust gas sensor. Protrusions 32 and 33 may be originated through the crimping process and thus delimit a narrowing area 31. Such narrowing contributes to fixing the grommet's position.

As previously mentioned, PTFE material is flexible. Consequently, cramping of the protective cover 3 may lead to a corresponding deformation of grommet 1, thus increasing the tightness around lead wires 2. Advantageously, this process may improve the water tightness of the oxygen sensor, whereas the pores of the PTFE material may allow air entrance. Oxygen may therefore abundantly enter a reference channel 80 and reach a reference electrode 82. As mentioned above, a high oxygen presence at the reference channel may drastically reduce a CSD effect in the sensor, and may actually avoid it completely at sufficiently high air flow rates.

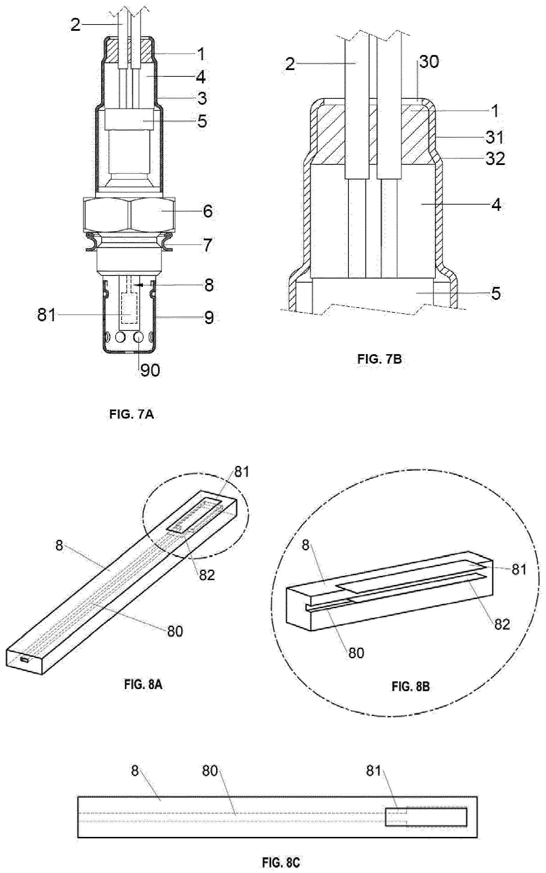

Figure 7A is a perspective view of a further example of an exhaust gas sensor comprising a PTFE grommet and a ceramic grommet, in particular made of Cordierite.

More particularly, 7B illustrates a detail perspective of a reference side assembly according to an example of an exhaust gas sensor.

The difference between examples 6A and 7A is the presence of a ceramic grommet 4 which complements a small PTFE grommet in example 7A. The example of figures 6A-6C may comprise a single PTFE grommet, whose length extends from the reference side outlet 30 to the lead wire terminals area or contact clamp 5 outer side.

Alternatively, the example of figure 7A may comprise a two piece grommet composed of a first PTFE grommet portion 1 and a second ceramic grommet portion 4. The first PTFE grommet portion 1 may extend from the reference side outlet 30 to the second ceramic grommet portion 4. The latter, may extend from the inner side of the PTFE grommet 1 to the contact clamp 5. Advantageously, the grommet PTFE in the example of figure 7A may have smaller dimensions than that of the example of figure 6A. As it has been previously noted, ceramic materials usually have a lower cost than PTFE materials. By reducing the amount of PTFE material in the grommet function, the sensor may notably increase its cost-effectiveness, while its function to avoid a CSD effect.

It has to be noted that in figures 5-7 the oxygen sensor is shown only very schematically. The structure, details and operating parameters of the oxygen sensor are known by the person skilled in the art, who will be able to employ these types of sensors with the most suitable features for any particular application. For example, the sensors may range from 5-wire to 1-wire sensors, and the layouts of the sensors may be decided on the basis of the number of wires and/or the space available in each particular application.

Consequently, other embodiments of an exhaust gas sensor grommet are possible. Such grommet may have, for example, one to five axial through-channels radially distributed correspondingly to the number of lead wires, as to receive each one of the wires.

Figures 8A, 8B and 8C illustrate perspective views of a further example of a sensor element comprising a reference channel 80, a reference electrode 82 and a measuring electrode 81. As a consequence of the porous PTFE grommet 1 being present in all the previous examples of oxygen sensors, the reference channel 80 may always receive a high amount of reference air (external air), and thus the reference electrode 82 may be in contact with a sufficiently high amount of oxygen so that the CSD effect may be completely avoided.

Moreover, due to the high tightness that the crimped PTFE grommet 1 may provide to the protective cover 3, the entrance of water and pollutants from the exhaust gases may be drastically reduced. This fact may further contribute to CSD avoidance and to a higher endurance of the lambda probe.

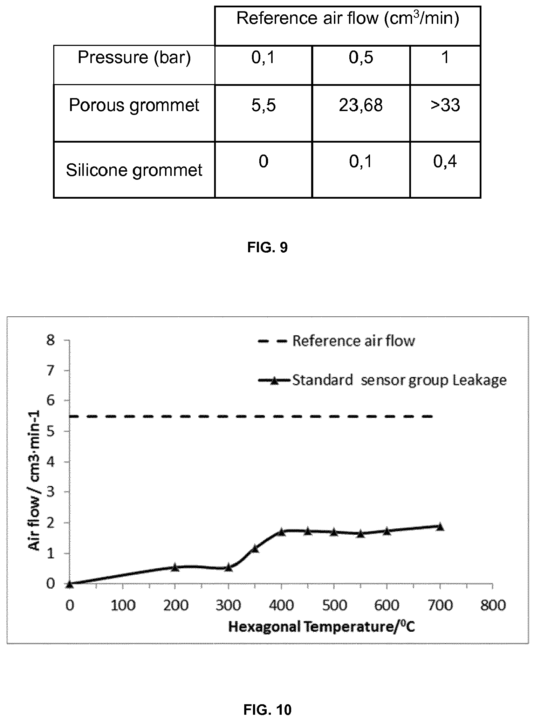

Figure 9 illustrates the reference air flow (cm$^3$/min) through a porous grommet as a function of Pressure (bar).

In order to evaluate the breathing capacity of the porous grommet of the above mentioned examples, that is, the amount of air that may enter the reference channel and thus counteract the exhaust fumes leakage from the measuring side, and avoid an eventual CSD effect, leakage tests were done on the previous examples configurations. The test procedure consisted of emptying the housing leaving it without any interior components, e.g. the ceramic sensor, but comprising the porous grommet. The housing was then filled with air at different pressures, and the leakage flow (cm$^3$/min) from the inside to the outside through the porous grommet was measured. This procedure was repeated at different pressures. As a consequence, the Reference air flow (cm$^3$/min) as a function of Pressure (bar) was obtained and values charted as illustrated in figure 9.

Figure 10 illustrates reference air flow through a porous grommet (dotted line) and exhaust fumes leakage in a standard sensor group (solid line). Both curves are charted in an air flow (cm$^3$/min) versus hexagonal member temperature ($\underline{o}$C) chart.

Such chart yields results from a study of the exhaust fumes leakage on a standard sensor group. Such leakage usually arrives from the measuring side and goes through the sealing ceramic pack 12, whose purpose is to effectively seal the reference side from the measuring side. Since the ceramic pack 12 is in contact with the hexagonal member 6 precisely in the sealing critical area, the temperature of said hexagonal member 6 may be taken as control temperature.

In conventional silicone grommet sensors, an abrupt increase of the exhaust fumes leakage may be observed at temperatures around 370$\underline{o}$C and 410$\underline{o}$C, which usually leads to a CSD effect. Instead, the chart in figure 10 shows that the reference air flow (dotted line) is high enough as to compensate any leakage increase (solid line) so that a CSD effect may be avoided.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

**Claims**

1. An electrochemical exhaust gas sensor for determining an oxygen concentration in an exhaust flow of an internal combustion engine, comprising:

   a protective cover (3) comprising a first end attached to a part of a housing (100) exposed to an exhaust side, and a second end aimed to output one or more lead wires (2) exposed to a reference side;
   an oxygen sensor (8) at least partly enclosed within the protective cover (3) and connected to the one or more lead wires (2);
   the oxygen sensor (8) comprising a measuring electrode (81) exposed to the exhaust side;
   the oxygen sensor (8) comprising a reference electrode (82) exposed to a volume that is isolated from the exhaust side;
   at least one grommet (1) for sealing the second end of the protective cover (3), and
   one or more through-channels (11) provided in said grommet (1) for receiving the lead wires (2), **characterised in that** the at least one grommet (1) consists of a porous material that allows air diffusing from the reference side to the interior of the oxygen sensor (8) and then reaching the reference electrode (82).

2. An exhaust gas sensor according to claim 1, wherein the at least one grommet (1) is made of waterproof porous Polytetrafluoroethylene (PTFE).

3. An exhaust gas sensor according to any of claims 1 or 2, wherein the exhaust gas sensor further comprises a ceramic grommet (4) being disposed axially between the at least one grommet (1) and a contact clamp (5), said ceramic grommet (4) being provided with one or more axial through-channels (40) corresponding with the one or more axial through-channels (11) of the at least one grommet (1) geometrically and in number.

4. An exhaust gas sensor according to claim 3, wherein the ceramic grommet (4) is made of a Cordierite or Steatite material.

5. An exhaust gas sensor according to any of claims 3 or 4, wherein the ceramic grommet (4) has a 9.3 mm diameter and 8.0 mm in length.

6. An exhaust gas sensor according to any previous claims, wherein the at least one grommet (1) has a 7.20 mm diameter and 4.4 mm in length.

7. An exhaust gas sensor according to any previous claim, wherein the exhaust gas sensor withstands temperatures around 650$\underline{o}$C.

8. An exhaust pipe comprising an electrochemical exhaust gas sensor according to claim 7.

9. An internal combustion engine comprising an exhaust pipe according to claim 8.

10. A method for producing an electrochemical exhaust gas sensor for determining an oxygen concentration in an exhaust flow of an internal combustion engine, comprising:

providing at least one grommet (1), wherein the at least one grommet (1) consists of a porous material, and wherein the at least one grommet (1) has one or more axial through-channels (11); providing a protective cover (3); positioning the at least one grommet (1) in the interior of the protective cover (3) so that said grommet (1) is disposed axially between a reference atmosphere and a contact clamp (5) to form a reference side assembly, and pressing the reference side assembly made up of the porous grommet (1) and the protective cover (3) to form a structure which is at least indirectly materially bonded.

11. A method according to claim 10, wherein the at least one grommet (1) is made of waterproof porous Polytetrafluoroethylene (PTFE).

12. A method according to any of claims 10 or 11, further comprising providing a ceramic grommet (4) being disposed axially between the at least one grommet (1) and a contact clamp (5), said ceramic grommet (4) being provided with one or more axial through-channels (40) corresponding with the one or more axial through-channels (11) of the at least one grommet (1) geometrically and in number.

13. A method according to any of the previous claims, wherein the pressing on the protective cover is provided by a crimping machine.

FIG. 01

FIG. 2A

FIG. 2B

FIG. 3A

FIG. 3B

FIG. 3C

FIG. 3D

FIG. 4A

FIG. 4B

FIG. 5

FIG. 6A

FIG. 6B

FIG. 6C

FIG. 7A

FIG. 7B

FIG. 8A

FIG. 8B

FIG. 8C

| | Reference air flow (cm³/min) | | |
|---|---|---|---|
| Pressure (bar) | 0,1 | 0,5 | 1 |
| Porous grommet | 5,5 | 23,68 | >33 |
| Silicone grommet | 0 | 0,1 | 0,4 |

**FIG. 9**

**FIG. 10**

**EP 3 460 462 A1**

Europäisches
Patentamt

European
Patent Office

Office européen
des brevets

# EUROPEAN SEARCH REPORT

Application Number

EP 17 38 2636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/074284 A1 (DAY JOHN [US] ET AL) 22 April 2004 (2004-04-22) * the whole document * ----- | 1-13 | INV. G01N27/407 |
| X | US 6 276 191 B1 (SCHNEIDER JENS STEFAN [US] ET AL) 21 August 2001 (2001-08-21) * the whole document * ----- | 1,5,6, 8-10,13 | |
| X | US 4 908 119 A (SAITO TOSHITAKA [JP] ET AL) 13 March 1990 (1990-03-13) * the whole document * ----- | 1,3,5,6, 8-10,12, 13 | |
| X | CN 206 114 582 U (WENZHOU OSMARK SENSOR CO LTD) 19 April 2017 (2017-04-19) * the whole document * ----- | 1,5,6, 8-10,13 | |

| | | | TECHNICAL FIELDS SEARCHED (IPC) |
|---|---|---|---|
| | | | G01N |

The present search report has been drawn up for all claims

| Place of search | Date of completion of the search | Examiner |
|---|---|---|
| Munich | 16 February 2018 | De Masi, Rita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 38 2636

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2018

| Patent document cited in search report | | | Publication date | Patent family member(s) | | | Publication date |
|---|---|---|---|---|---|---|---|
| US 2004074284 | A1 | | 22-04-2004 | EP US | 1411353 2004074284 | A2 A1 | 21-04-2004 22-04-2004 |
| US 6276191 | B1 | | 21-08-2001 | DE JP JP US | 19832098 4445605 2000046789 6276191 | A1 B2 A B1 | 27-01-2000 07-04-2010 18-02-2000 21-08-2001 |
| US 4908119 | A | | 13-03-1990 | DE US | 3729164 4908119 | A1 A | 14-04-1988 13-03-1990 |
| CN 206114582 | U | | 19-04-2017 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10043089

- US 5900129 A